# EUROPEAN PATENT APPLICATION

(11) **EP 0 672 571 A1**
(43) Date of publication of application: **20.09.1995**
(21) Application number: 95301280.4
(22) Date of filing: 28.02.1995
(51) Int. Cl.: B62B 5/04, B60P 3/075

(54) **Retaining device**

(30) Priority: 15.03.1994 GB 9404969
(71) Applicant: BEARFERN LIMITED, Cannock, Staffs WS11 3JL (GB)
(72) Inventor: Evans, Clifford John, Cannock, Staffordshire, WS11 3JL (GB)
(74) Representative: Prutton, Roger

(57) **Abstract**

As shown in Figure 1, a wheel retaining device comprises an L-shaped member (12) which has one arm provided with means for securing it to the ground with the other arm (20) projecting upwardly. A second member (14) is pivotally mounted on the L-shaped member and has a slot through which the upwardly projecting arm extends. The second member can be pivoted between the first position (shown in full lines) in which the wheel to be retained is located in the slot, and engages the upwardly projecting arm, and a second position (shown in broken lines) in which it surrounds and engages the wheel to prevent it being disengaged from the upwardly projecting arm. The first and second members can be locked together when the second member is in its second position.

## Description

This invention relates to a retaining device, and particularly but not exclusively to a retaining device for securing wheeled refuse containers in a desired location.

According to the present invention there is provided a retaining device for retaining a wheel in a desired location, the retaining device comprising first and second elements arranged to engage the periphery of the wheel, in use, the second element being movable with respect to the first element between a first position in which the wheel can be introduced between the first and second elements, and a second position in which the wheel when provided between the first and second elements cannot be removed therefrom.

Preferably the retaining device further comprises means for locking the second element in its second position.

The second element is preferably pivotable with respect to the first element between the first and second positions.

The second element is preferably provided with a slot of width greater than the axial thickness of the wheel to be retained, the wheel extending through the slot, in use.

To lock a wheel in the desired location using the retaining device, the wheel is positioned adjacent the first element, the wheel extending through the slot provided in the second element when the second element is in its first, lowered, position. The second element is then pivoted to its second, raised, position and locked in this position, trapping the wheel between the first and second elements, and hence locking the wheel in the desired location.

The first element preferably forms part of a generally L-shaped member, the second element being pivotally mounted upon the L-shaped member with the first element extending through the slot in the second element. The retaining device is preferably arranged to be secured in the desired location by securing the generally horizontally extending arm of the L-shaped member in the desired location.

The second element is preferably provided with a handle for use in moving the second element between its lowered and raised positions, the handle preferably extending at an angle to the second element.

The invention will further be described, by way of example, with reference to the accompanying drawings, in which:
Figure 1 is a side view of a retaining device for use in securing a four wheeled refuse container in a desired location; and
Figure 2 is a plan view of the retaining device of Figure 1.

The retaining device 10 illustrated in the accompanying drawings is for use in securing a four wheeled refuse container in a desired location. It will be understood that the retaining device 10 is also suitable for use in securing other wheeled devices in desired locations. For example the retaining device 10 could be used for locking trollies in position in shops or factories or for securing wheeled hospital beds in position.

The retaining device 10 comprises a generally L-shaped member 12 to which is pivotally mounted an elongate member 14. The horizontally extending arm 16 of the L-shaped member 12 is provided with apertures for screws or bolts for securing the retaining device 10 to the floor. A tubular bushing 18 is secured, conveniently by welding, at the junction of the horizontally extending arm 16 and an upstanding arm 20 of the L-shaped member 12, the axis of the bushing 18 extending generally horizontally across the width of the L-shaped member 12. The tip 22 of the upstanding arm 20 is curved so as to extend away from the arm 16 at an angle of approximately 30°.

The elongate member 14 comprises a pair of steel side walls 24 interconnected at one end by an end wall 26. A pivot pin 28 in the form of a screw threaded bolt extends between the side walls 24 and is secured in position by a suitable internally screw threaded member. The pivot pin 28 could alternatively be attached to the side walls by welding. The pivot pin 28 extends through the bushing 18 to provide the pivotal interconnection between the elongate member 14 and the L-shaped member 12.

Adjacent the pivotal interconnection, the side walls 24 of the elongate member 14 are bent so as to take a shallow V-shaped form allowing the member 14 to pivot with respect to the L-shaped member 12 when the retaining device 10 is secured in the desired location. The side walls 24 of the member 14 extending between the arms 16, 20 of the L-shaped member 12 are interconnected by a steel plate to form a handle 30, the other end of the member 14 forming a wheel engaging region 32.

The region between the side walls 24, the end wall 26 and the plate forming the handle 30 defines an elongate slot 34 of width greater than the axial thickness of the wheel to be secured. The bushing 18 and the upstanding arm 20 of the L-shaped member 12 extend through the slot 34. In the illustrated embodiment, the slot 34 extends across substantially the complete width of the member 14, but where the device is to be used with a wheel of lesser thickness, the width of the slot 34 may be reduced to extend across only part of the width of the member 14 by providing a base wall interconnecting the arms 24 and providing the slot 34 in the base wall.

The handle 30 is provided with a key operated locking mechanism 36 which is arranged so that rotation of the locking mechanism 36 using the key rotates a latch provided on the underside of the handle. A suitable keeper 38 is provided on the upper surface of the member 12 so that, in use, when the channel shaped member 14 is pivoted to a position in which the handle 30 extends adjacent the horizontally extending arm 16, operation of the key operated locking mechanism 36 moves the latch to a position in which it engages the keeper 38 to lock the handle 30 and the horizontally extending arm 16 together. The keeper could be provided on the arm 16 but preferably is defined by a notch in a flange protruding from the rear face of the arm 20.

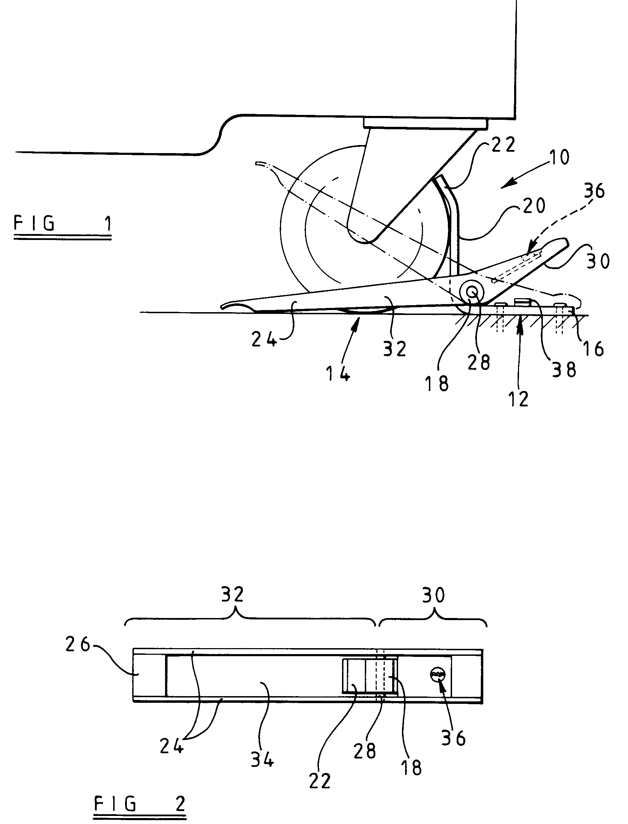

In use, when it is desired to secure a container in position, the position of the container is adjusted until one wheel thereof abuts the upstanding arm 20 of the L-shaped member 12 with the wheel extending within the slot 34. The handle 30 is pivoted downwards towards the horizontally extending arm 16, the wheel engaging region 32 trapping the wheel between the upstanding arm 20 of the L-shaped member 12 and the wheel engaging region 32 of the member 14. The curved tip 22 of the arm 20 providing a positive wheel retaining location in conjunction with the member 14. It will be recognised that when the separation of the tip 22 of the upstanding arm 20 and the end of the slot 34 furthest from the pivotal interconnection is less than the diameter of the wheel, the wheel is trapped and can only be removed by lowering the wheel engaging region 32. This position of the member 14 is shown by a dashed line in Figure 1. It will be recognised that the provision of the bend in the upstanding arm 20 of the L-shaped member 12 reduces the amount of movement of the wheel engaging region 32 necessary to reach this position. Once in this position, the handle 30 is locked to the horizontally extending arm 16 of the L-shaped member 12.

A simpler locking mechanism which could be used instead of that described above comprises a loop upstanding from the upper surface of the horizontally extending arm arranged to extend through a slot provided in the handle, when the handle extends adjacent the horizontally extending arm, and a pad-lock arranged so that when the loop extends through the slot, the hasp of the pad-lock can be passed through the loop to restrict movement of the handle away from the horizontally extending arm.

Where locking of the device is unnecessary, the locking mechanism may be replaced by means for biasing the handle towards the horizontally extending arm, for example by providing a spring between the handle and horizontally extending arm or by providing weights on the handle.

Although only one retaining device is illustrated and described, a plurality of such devices may be used to secure the container in position.

There does not necessarily need to be one retaining device provided for each wheel, and it is envisaged to use two such retaining devices in order to secure a four wheel refuse container in a desired location, the two retaining devices preferably being operable using a single key.

## Claims

1. A retaining device for retaining a wheel in a desired position, the retaining device comprising first and second elements arranged to engage the periphery of the wheel, in use, the second element being movable with respect to the first element between a first position in which the wheel can be introduced between the first and second elements, and a second position in which the wheel when provided between the first and second elements cannot be removed therefrom.

2. A retaining device as claimed in Claim 1 further comprising means for locking the second element in its second position.

3. A retaining device as claimed in any preceding claim in which said second element is pivotable relative to the first element between said first and second positions.

4. A retaining device as claimed in Claim 1 in which said second element is provided with a slot through which a retained wheel extends in use.

5. A retaining device as claimed in Claim 4 in which the first element forms one arm of a generally L-shaped member and the second element is pivotally mounted on said L-shaped member with said first element extending through said slot in said second element.

6. A retaining device as claimed in Claim 5 in which the other arm of said L-shaped member is provided with means for securing it in a generally horizontally extending position at said desired location.

7. A retaining device as claimed in Claim 5 or Claim 6 in which said second element is provided with a handle for moving it between its first and second positions.

8. A retaining device as claimed in Claim 7 in which said handle is inclined to said second element so as to be spaced from said other arm of said L-shaped member when the second element is in its first position and lies adjacent said other arm when the second element is at its second position.

9. A retaining device as claimed in Claim 8 in which a locking mechanism is provided on said handle for releasably locking it to said other arm when the second element is at its second position.

10. A retaining device for retaining a wheel in a desired position substantially as hereinbefore described with reference to the accompanying drawings.
